# EUROPEAN PATENT SPECIFICATION

(11) **EP 1 340 528 B1**
(45) Date of publication and mention of the grant of the patent: **29.08.2007**
(21) Application number: 02004327.9
(22) Date of filing: 01.03.2002
(51) Int. Cl.: B01D 39/02, B01D 39/08

(54) **Filtering mass in sheet form for an air filter, particularly for a motor vehicle cabin, and methods for obtaining the mass**
Blattförmiges Filtermaterial für Luftfilter, insbesondere für Fahrzeugkabinen, und Verfahren zu dessen Herstellung
Elément filtrant en forme de feuille pour filtre à air, en particulier pour les habitacles d'automobiles, et procédé de fabrication d'un tel élément

(43) Date of publication of application: 03.09.2003
(73) Proprietor: Sogefi Filtration S.p.a., 46100 Mantova (IT)
(72) Inventor: Baracchi, Paolo, 10155 Torino (IT); Crovetti, Claudio, 46100 Mantova (IT); Tallano, Sergio, 46047 Porto Mantovano (Prov. of Mantova) (IT)
(74) Representative: Modiano, Micaela Nadia

(56) References cited:
- WO-A-01/66223
- US-A- 4 904 343
- US-B1- 6 197 097
- PATENT ABSTRACTS OF JAPAN vol. 011, no. 369 (C-461), 2 December 1987 (1987-12-02) & JP 62 140614 A (MATSUSHITA ELECTRIC IND CO LTD), 24 June 1987 (1987-06-24)
- PATENT ABSTRACTS OF JAPAN vol. 013, no. 187 (C-592), 2 May 1989 (1989-05-02) & JP 01 015112 A (TOSHIBA CORP), 19 January 1989 (1989-01-19)

## Description

The present invention relates to a filtering mass in sheet form for an air filter for an enclosed space, particularly for a motor vehicle cabin.

Filters are known which are installed at ventilation systems of enclosed spaces in order to filter the external air that enters the enclosed spaces; this is the case, for example, of motor vehicle cabins, or of buildings used for living or for work.

Very commonly, such filters comprise a filtering mass in sheet form, which is inserted in a pleated or flat arrangement in a supporting frame, and currently the filtering mass is substantially produced according to two types.

A first type of filtering mass consists of a sheet formed by fibers of different materials, such as for example polyester, polyamide, polypropylene, pure or mixed together, providing what is known as "nonwoven fabric", or also by cellulose fibers, either substantially pure or mixed with fibers of materials such as the ones cited above, providing what is known as "filter paper".

The materials and fibers currently used are referenced respectively hereinafter as "standard-type materials" and "standard fibers".

The fiber mat meant to constitute the sheet of filtering mass is subjected, after forming, to impregnation in order to give it the necessary mechanical consistency and any other characteristics, such as for example fire-resistant and antibacterial properties, and is finally subjected to finishing operations.

With this type of filtering mass, filters are produced which are known as "particulate filters" because they are capable of retaining exclusively particulate matter.

If it is also necessary to retain unwanted gaseous substances, a second type of sheet of filtering mass is currently used which is constituted by an intermediate layer of carbon granules enclosed between two layers of standard fibers, which ensure particle retention, while the intermediate layer of carbon granules retains the gaseous substances.

This second type of sheet of filtering mass, however, has drawbacks, such as a high cost and the generation of high load losses; moreover, carbon granules can break away and be dispersed into the environment.

Filter masses, as set forth in the preamble of claim 1, are known from the document Patent abstract of Japan Vol. 011, No. 369 (C-461), 2 December 1987 & JP 62 140614 A and from WO 01/66223A and US-4 904 343. Document US 3 769 144 discloses a quilted fabric containing high surface area carbon fibers.

The aim of the present invention is to provide a filtering mass in sheet form for an air filter, which is capable of retaining both particulate matter and undesirable gaseous substances, has a low cost, generates limited load losses and cannot cause contamination.

This aim is achieved by a filtering mass in sheet form for an air filter for an enclosed space, particularly a motor vehicle cabin, according to the invention composed of elements made of standard-type materials normally used to form filtering masses and carbon elements rendered active for the absorption of gaseous substances, characterized in that it comprises at least one layer comprising said elements which are made of pure standard-type materials and pure active carbon in the form of filament and woven so as to form an actual fabric in which the filaments made of pure standard-type materials and the pure carbon filaments are arranged, respectively, as warp and weft filaments.

Further characteristics and advantages of the invention will become better apparent from the description of some preferred but not exclusive embodiments thereof, illustrated only by way of non-limitative example in the accompanying drawings, wherein:
Figure 1 is a view of a portion of a sheet of filtering mass with a single layer of elements in fiber form;
Figures 2 to 5 are views of portions of different sheets of filtering mass with two layers of elements in fiber form;
Figure 6 is a view of a portion of a sheet of filtering mass with a single layer of fabric formed by elements in filament form;
Figure 7 is a view of a portion of a sheet of filtering mass with a layer of fabric formed by elements in filament form and a layer of elements in fiber form;
Figure 8 is a view of a portion of a sheet of filtering mass with three layers of elements in fiber form.

The embodiments of figures 6 and 7 are comprised within the scope of the claims.

The embodiments of the other figures are therefore deemed, in the context of the claimed invention, to constitute examples which are useful for understanding such invention.

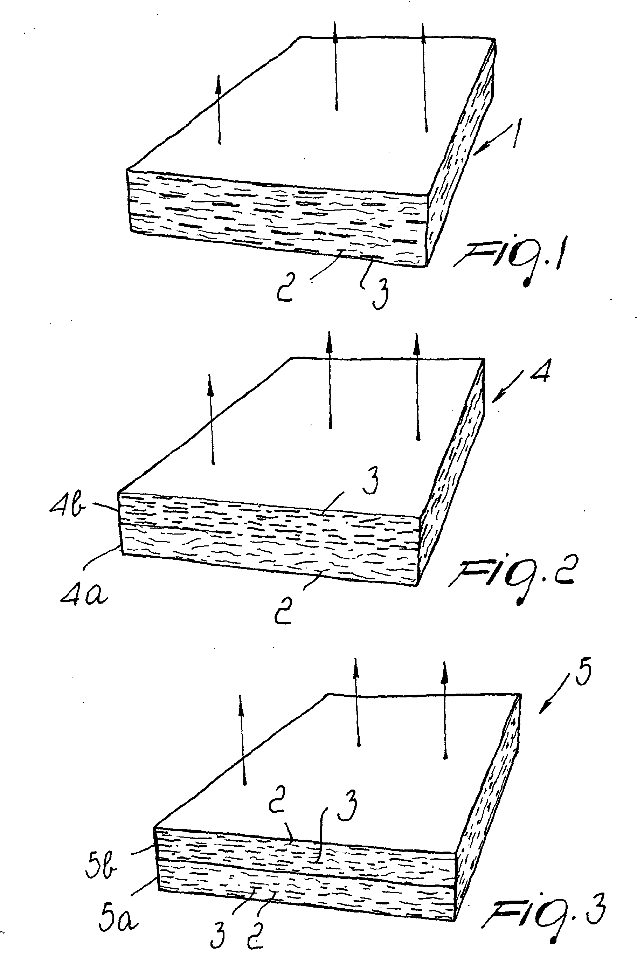

With reference to Figure 1, the reference numeral 1 designates a portion of a sheet of filtering mass which comprises a single layer of elements in the form of fibers of materials normally used in the manufacture of filters which, as mentioned, are referenced herein as standard fibers, are shown in thin lines and are designated by the reference numeral 2; these fibers are mixed with carbon fibers, shown in thick lines and designated by the reference numeral 3, which are generally obtained from vegetable or synthetic polymers, activated for the adsorption of gaseous substances by means of known processes.

All the fibers comprised in this embodiment, as well as the fibers comprised in the other embodiments described hereinafter, may have any length and may be obtained in any manner, for example by breaking up filaments as regards the carbon fibers, which obviously, regardless of how they are obtained, are always activated for the adsorption of gaseous substances.

The mat that leads to the formation of the described sheet can be obtained in a conventional apparatus supplied with the cited materials in the required proportions.

A sheet of filtering mass has thus been obtained which is capable of retaining both the particulate fraction, by virtue of the presence of the standard fibers, and, by virtue of the presence of the carbon fibers, the undesirable gaseous substances contained in the air that crosses it in a direction that can be the one indicated by the arrows in the figure but can also be the opposite direction.

Further embodiments are now described, always adopting the graphical representation in which the standard fibers 2 are shown in thin lines and the carbon fibers 3 are shown in thick lines.

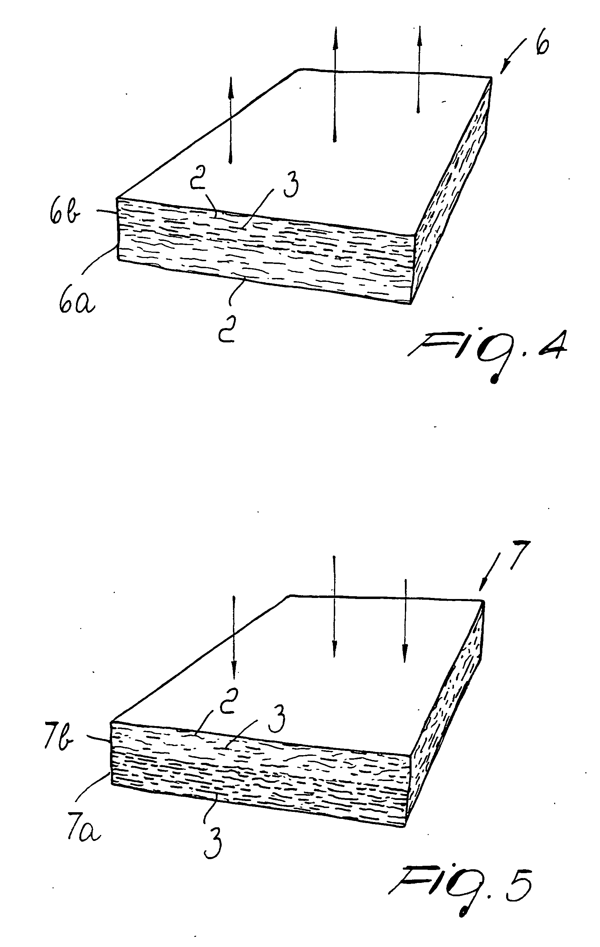

The sheet 4 of Figure 2 comprises two layers, i.e., a layer 4a comprising pure standard fibers 2 and a layer 4b comprising pure carbon fibers 3.

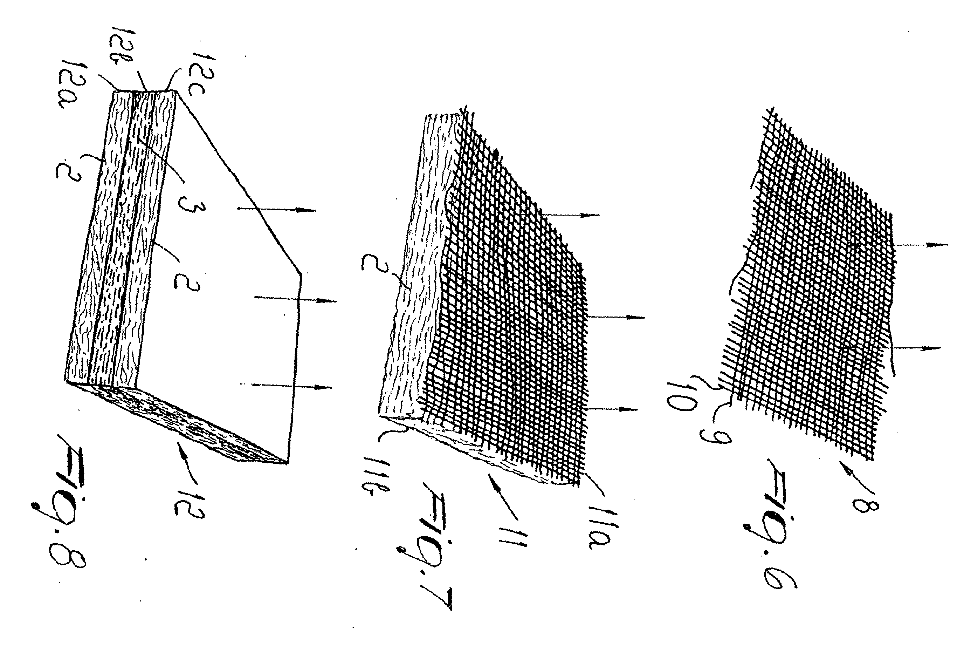

The sheet 5 of Figure 3 also comprises two layers 5a, 5b, both comprising standard fibers 2 and carbon fibers 3.

The sheet 6 of Figure 4 comprises two layers: a layer 6a, which comprises pure standard fibers 2, and a layer 6b, which comprises standard fibers 2 and carbon fibers 3.

Finally, the sheet 7 of Figure 5 comprises two layers 7a and 7b: the first one comprises pure carbon fibers 3 and the second one comprises standard fibers 2 and carbon fibers 3.

All these sheets are arranged in the filter so that the first layer crossed by the air is the one that comprises standard fibers, as shown by the arrows in the figures.

A method for obtaining a sheet of filtering mass of the type described with reference to Figures 2 to 5 comprises a first step, for obtaining in output from an appropriately supplied apparatus a mat suitable to form the first layer of the sheet, and a second step, for depositing on said mat, in the presence of adhesive or not, loose fibers suitable to form the second layer; this is followed by the impregnation and finishing steps.

Another method for obtaining a sheet of the type shown in Figures 2 to 5 comprises a first step, in which two mats are formed in a superimposed configuration by two different appropriately supplied apparatuses, such mats being meant to form respectively the first and second layers of the sheet, and subsequent impregnation and finishing steps.

Another method for obtaining a sheet of filtering mass with two layers provides for the formation of two perfectly finished separate mats, suitable to form respectively the first and second layers of the sheet, and the gluing thereof in a superimposed configuration.

Figure 6 illustrates an embodiment 8 of the invention, which comprises a single layer formed by elements in filament form made of standard-type materials such as 9 and of carbon filaments such as 10, woven so as to form an actual fabric.

Obviously, the carbon filaments such as 10 are activated, and so are the carbon fibers considered earlier, for the adsorption of gaseous substances.

In the embodiment 11 of Figure 7 there is a first layer 11a of fabric, exactly of the type shown in Figure 6, and a second layer 11b comprising pure standard fibers.

Further variations can be provided by combining a layer of actual fabric, such as 8 of Figure 6 or 11a of Figure 7, with a layer that comprises pure carbon fibers, or with a layer comprising mixed standard fibers and carbon fibers.

All the above described embodiments can be provided with an additional supporting layer, normally arranged on the air exit side, as in the case for example of the sheet 12 of Figure 8, which is obtained by adding to a sheet with two layers 12a and 12b, such as the one shown in Figure 2, a third layer 12c made of standard fibers 2.

A sheet such as the one described above can be obtained with a method that provides for a first step for forming three superimposed mats produced by different apparatuses suitable to form respectively the three layers, and final steps for impregnation and finishing, or also with a method that provides for a step for gluing two finished mats made of standard fibers, after inserting carbon fibers between them in any manner.

In a different embodiment, the supporting layer can be provided by means of a net.

The invention is susceptible of numerous other modifications and variations, all of which are within the scope of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A filtering mass in sheet form for an air filter for an enclosed space, particularly a motor vehicle cabin, composed of elements (2, 9) made of standard-type materials normally used to form filtering masses and carbon elements (3, 10) rendered active for the adsorption of gaseous substances, **characterized in that** it comprises at least one layer (8, 11 a) comprising said elements which are made of pure standard-type materials and pure active carbon in the form of filament (9, 10) and woven so as to form an actual fabric in which the filaments made of pure standard-type materials (9) and the pure carbon filaments (10) are arranged, respectively, as warp (9) and weft (10) filaments.

2. The filtering mass according to claim 1, **characterized in that** it comprises two layers (11a, 11b), a first one (11a) of said layers (11a, 11b) comprising the elements in filament form made of pure standard-type materials (9) and pure carbon filaments (10), woven so as to form an actual fabric, and a second one (11b) of said layers comprises pure standard fibers (2).

3. The filtering mass according to claim 1, **characterized in that** it comprises two layers, a first one (8, 11 a) of said layers comprising the elements in filament form made of pure standard-type materials (9) and pure carbon filaments (10), woven so as to form an actual fabric, and a layer comprising pure carbon fibers (3).

4. The filtering mass according to claim 1, **characterized in that** it comprises two layers, a first one (8, 11a) of said layers comprising the elements in filament form made of pure standard-type materials (9) and of pure carbon filaments (10), woven so as to form an actual fabric, and a layer comprising pure standard fibers (2) and carbon fibers (3).

5. The filtering mass according to one or more of the preceding claims, **characterized in that** it comprises an additional supporting layer (12c).

6. The filtering mass according to claim 5, **characterized in that** the supporting layer (12c) is provided by means of standard fibers (2).

7. The filtering mass according to claim 5, **characterized in that** the supporting layer (12c) is provided by means of a net.

8. The filtering mass according to one or more of the claims 2-7, **characterized in that** said second layer (11b) and/or additional supporting layer (12c) are impregnated so as to to have mechanical consistency and/or fire resistant and/or antibacterial properties.

## Patentansprüche

1. Filtermasse für Luftfilter in Plattenform für einen eingeschlossenen Raum, insbesondere für Fahrzeugkabinen, bestehend aus Elementen (2, 9) aus normalerweise fiir die Herstellung von Filtermassen verwendeten Standardmaterialien und aus für die Adsorption von gasförmigen Substanzen aktivierten Kohlenstoffelementen (3, 10), **dadurch gekennzeichnet, dass** sie aus wenigstens einer Schicht (8, 11 a) mit den genannten Elementen aus reinen Standardmaterialien und reinem aktiven Kohlenstoff in Faserform (9, 10) besteht, welche so verwoben sind, dass sie ein richtiges Gewebe bilden, in dem die Fasern aus reinen Standardmaterialien (9) und die reinen Kohlenstofffasern (10) jeweils als parallele (9) bzw. Einschlagfäden (10) angeordnet sind.

2. Filtermasse nach Anspruch 1, **dadurch gekennzeichnet, dass** sie aus zwei Schichten (11a, 11b) besteht, wobei die erste (11a) der genannten Schichten (11a, 11b) aus faserförmigen Elementen aus reinen Standardmaterialien (9) und reinen Kohlenstofffasern (10), die so verwoben sind, dass sie ein richtiges Gewebe bilden, und die zweite dieser Schichten (11b) aus reinen Standardfasern (2) besteht.

3. Filtermasse nach Anspruch 1, **dadurch gekennzeichnet, dass** sie aus zwei Schichten besteht, einer ersten (8, 11 a) bestehend aus den faserförmigen Elementen aus reinen Standardmaterialien (9) und reinen Kohlenstofffasern (10), die so verwoben sind, dass sie ein richtiges Gewebe bilden, und einer Schicht aus reinen Kohlenstofffasern (3).

4. Filtermasse nach Anspruch 1, **dadurch gekennzeichnet, dass** sie aus zwei Schichten besteht, einer ersten (8, 11 a) bestehend aus den faserförmigen Elementen aus reinen Standardmaterialien (9) und reinen Kohlenstofffasern (10), die so verwoben sind, dass sie einrichtiges Gewebe bilden, und einer Schicht bestehend aus reinen Standardfasern (2) und Kohlenstofffasern (3).

5. Filtermasse nach einem oder mehreren der vorhergehenden Ansprüche, **dadurch gekennzeichnet, dass** sie eine zusätzliche tragende Schicht (12c) beinhaltet.

6. Filtermasse nach Anspruch 5, **dadurch gekennzeichnet, dass** die tragende Schicht (12c) aus Standardfasern (2) besteht.

7. Filtermasse nach Anspruch 5, **dadurch gekennzeichnet, dass** die tragende Schicht (12c) aus einem Netz besteht.

8. Filtermasse nach einem oder mehreren der Ansprüche 2-7, **dadurch gekennzeichnet, dass** die genannte zweite Schicht (11b) und/oder zusätzliche tragende Schicht (12c) imprägniert sind, so dass sie mechanisch beständig sind und/oder feuerfeste und/oder antibakterielle Eigenschaften besitzen.

## Revendications

1. Masse filtrante sous forme de feuilles pour un filtre à air destiné à un espace clos, particulièrement un habitacle de véhicule motorisé, composée d'éléments (2,9) réalisés en des matières de type standard normalement utilisées pour former des masses filtrantes et d'éléments en carbone (3,10) rendus actifs pour l'adsorption de substances gazeuses,
**caractérisée en ce qu'**elle comprend au moins une couche (8,11a) comprenant lesdits éléments lesquels sont réalisés en des matières de type standard pures et en carbone actif pur sous la forme de filaments (9,10) et tissés de façon à former un véritable tissu dans lequel les filaments réalisés en des matières de type standard pures (9) et les filaments en carbone pur (10) sont agencés, respectivement, sous la forme de filaments de chaîne (9) et de trame (10).

2. Masse filtrante selon la revendication 1,
**caractérisée en ce qu'**elle comprend deux couches (11a,11b), une première (11a) desdites couches (11a,11b) comprenant les éléments sous forme filamentaire réalisés en des matières de type standard pures (9) et des filaments en carbone pur (10), tissés de façon à former un véritable tissu, et la seconde (11b) desdites couches comprenant des fibres standard pures (2).

3. Masse filtrante selon la revendication 1,
**caractérisée en ce qu'**elle comprend deux couches, une première (8,11a) desdites couches comprenant les éléments sous forme filamentaire réalisés en des matières de type standard pures (9) et des filaments en carbone pur (10), tissés de façon à former un véritable tissu, et une couche comprenant des fibres de carbone pur (3).

4. Masse filtrante selon la revendication 1,
**caractérisée en ce qu'**elle comprend deux couches, une première (8,11a) desdites couches comprenant les éléments sous forme filamentaire réalisés en des matières de type standard pures (9) et des filaments en carbone pur (10), tissés de façon à former un véritable tissu, et une couche comprenant des fibres standard (2) et des fibres de carbone (3) pures.

5. Masse filtrante selon l'une ou plusieurs des revendications précédentes,
**caractérisé en ce qu'**elle comprend une couche de support supplémentaire (12c).

6. Masse filtrante selon la revendication 5,
**caractérisée en ce que** la couche de support (1 2c) est prévue au moyen de fibres standard (2).

7. Masse filtrante selon la revendication 5,
**caractérisée en ce que** la couche de support (12c) est prévue au moyen d'un treillis.

8. Masse filtrante selon l'une ou plusieurs des revendications 2-7,
**caractérisé en ce que** ladite seconde couche (1 1 b) et/ou ladite couche de support supplémentaire (1 2c) sont imprégnées de façon à avoir une consistance mécanique et/ou une résistance au feu et/ou des propriétés anti-bactériennes.
